# NOUVEAU FASCICULE DE BREVET EUROPEEN

(11) **EP 0 619 691 B2**
(45) Date de publication et mention de la décision concernant l'opposition: **22.08.2007**
(45) Mention de la délivrance du brevet: 23.02.2000
(21) Numéro de dépôt: 94400744.2
(22) Date de dépôt: 06.04.1994
(51) Int. Cl.: H05B 3/84, H05B 3/06, B32B 17/10

(54) **Vitrage muni d'un élément de connexion**
Glasscheibe mit Anschlusselement
Window with connecting element

(30) Priorité: 08.04.1993 FR 9304165
(43) Date de publication de la demande: 12.10.1994
(73) Titulaire: SAINT-GOBAIN GLASS FRANCE, 92400 Courbevoie (FR)
(72) Inventeur: Leclercq, Philippe, F-91700 Sainte Geneviève de Bois (FR)
(74) Mandataire: Le Vaguerèse, Sylvain Jacques

(56) Documents cités:
- EP-A- 0 299 868
- EP-A- 0 490 723
- EP-A- 0 524 113
- DE-B- 1 286 265
- US-A- 3 484 584
- US-A- 4 100 398
- US-A- 4 542 282
- US-A- 4 878 850

## Description

L'invention concerne un vitrage muni d'un élément de connexion afin de le relier à des équipements hors vitrages, par exemple à une source d'alimentation électrique, à des capteurs, à une radio...

Il existe plusieurs types de vitrages nécessitant une liaison électrique. Il s'agit par exemple des vitrages chauffants, des vitrages à propriétés optiques électro-commandées ou des vitrages possédant une fonction nécessitant cette alimentation comme, par exemple, des capteurs, une antenne, etc...

Quel que soit ce type de vitrage, l'alimentation électrique est en général assurée par une bande collectrice reliée électriquement à la fois aux éléments nécessitant cette alimentation et à une source d'alimentation électrique.

La connexion de la bande collectrice à la source d'alimentation électrique est assurée par un élément dit de connexion comportant, de manière générale, des parties conductrices et un enrobage.

Les parties conductrices assurent la connexion proprement dite. Il peut s'agir de deux pattes métalliques soudées ou de deux cosses ou encore de viroles ou tout autre moyen de connexion. Afin de protéger ces parties conductrices de l'environnement extérieur, notamment des chocs et de l'humidité, un enrobage enveloppe usuellement ces parties conductrices.

L'enrobage peut être constitué, par exemple, par une bande isolante enroulée ou extrudée autour des parties conductrices. Il peut s'agir également d'une bande thermo-rétractée. Cependant, la solidité et l'étanchéité de l'élément de connexion ne répondent pas toujours aux exigences souhaitées. D'autre part, l'enrobage extrudé présente souvent des débordements pouvant être visibles.

L'enrobage peut également être constitué d'une pièce comportant des évidements afin d'y insérer les parties conductrices. Cette pièce est collée au vitrage. La colle permet à la fois d'assurer l'étanchéité de l'élément de connexion et contribue à la solidité de l'ensemble.

Cette solution, quoique satisfaisante, présente cependant un encombrement relativement important en bord de vitrage, dû notamment au fluage de la colle. Par ailleurs, il n'est pas toujours possible de prévoir l'étendue de ce fluage et donc de maîtriser l'encombrement de l'élément de connexion sur le vitrage.

L'invention a pour but de procurer un vitrage muni d'un élément de connexion dont l'encombrement est délimité voire réduit. L'invention propose également un élément de connexion dont la fiabilité, la solidité et l'étanchéité sont améliorées.

L'invention concerne un vitrage muni d'au moins un élément de connexion électrique comprenant des parties conductrices et un enrobage, l'enrobage étant moulé directement sur le vitrage et tel que décrit à la revendication 1.

Eventuellement, la partie du vitrage sur laquelle est moulé l'enrobage peut avoir subi un traitement préliminaire tels un nettoyage et/ou l'enduction d'un primaire, le dépôt d'une ou plusieurs couches...

L'enrobage permet ainsi d'assurer la fixation de l'élément de connexion sur le vitrage, sans moyen de fixation supplémentaire, tout en garantissant une bonne étanchéité et un encombrement délimité. Par ailleurs, cet encombrement est prévisible et reproductible d'une manière certaine.

Avantageusement cet encombrement peut atteindre des valeurs aussi petites qu'environ 40 mm², une fois l'élément de connexion fixé au vitrage.

La fixation de l'élément de connexion est assurée, à la fois par les parties conductrices, en position connectée, et par l'enrobage.

De manière préférée, les parties conductrices sont disposées tangentiellement au vitrage. Elles sont ainsi moins soumises à toute sollicitation dans le plan vertical. Par ailleurs, cette disposition réduit l'encombrement de l'élément de connexion en dehors du chant du vitrage. Les parties conductrices sont alors, de manière préférée, constituées d'au moins une virole de connexion dans laquelle vient s'enficher une cosse, par exemple mâle. Le cable électrique peut également être tangentiel au vitrage ou en équerre ou toute autre position, selon la configuration du vitrage dans une baie de carrosserie, de bâtiment...

On injecte le matériau constitutif de l'enrobage dans un moule dans lequel se trouve la partie à enrober du vitrage ainsi que les parties conductrices, en position connectée, la cavité du moule dans laquelle est injectée le matériau correspondant à la forme souhaitée de l'enrobage et tel que décrit à la revendication 5.

Le procédé comprend notamment les étapes suivantes :
■ application du moule contre le vitrage, muni des parties conductrices,
■ injection de la matière constituant l'enrobage,
■ démoulage.

Bien entendu, on peut également mettre en place le vitrage dans le moule et/ou placer les parties conductrices lorsque le vitrage est dans le moule.

Le matériau injecté peut être un polymère thermodurcissable, thermoplastique ou des polymères à deux composants réagissant lors de leur mise en oeuvre. Il peut s'agir également de matériaux susceptibles d'être utilisés selon la technologie RIM (Reaction Injection Moulding). Avantageusement les matériaux utilisés sont du type silicone, polyuréthane monocomposant ou bicomposant ou des matériaux fluides à chaud et solides à froid.

Selon le type de matériau utilisé, la buse d'injection et/ou le moule peuvent être respectivement chauffés et/ou refroidis.

Selon une variante avantageuse, le matériau constituant le moule est laissé sur le vitrage. Cela permet de raccourcir sensiblement la durée de mise en oeuvre du procédé en éliminant tous les temps relatifs au démoulage. Le matériau constituant le moule peut être le même que celui utilisé pour former l'enrobage. Il peut s'agir également d'un autre matériau présentant les propriétés requises.

Selon une variante avantageuse d'autres éléments fonctionnels ou des joints peuvent être moulés ou surmoulés conjointement avec l'enrobage des parties conductrices.

La cavité du moule présente alors différentes formes correspondant à chacun des éléments fonctionnels susceptibles d'être moulés ou surmoulés. Ces éléments peuvent être des éléments de guidage, de positionnement ou tout autre élément. Il est également possible d'utiliser des matériaux de natures différentes. Plusieurs buses d'injection peuvent éventuellement être prévues.

Les formes souhaitées pour former l'enrobage et, le cas échéant, d'autres éléments fonctionnels sont délimités par des butées et/ou les parois du moule. Le moule est de préférence constitué de deux éléments.

Avantageusement, au moins un orifice d'injection et au moins un orifice d'évent sont aménagés respectivement dans les parois de chaque élément de moule, respectivement. Un léger excès de matière peut ainsi s'écouler par le ou les orifice(s) d'évent. On s'assure ainsi que toute la cavité du moule dont la forme correspond à celle souhaitée pour l'enrobage est entièrement remplie de matière, afin d'assurer une parfaite étanchéité.

D'autres caractéristiques et avantages de l'invention apparaîtront dans la description suivante d'un exemple de réalisation d'un vitrage, en référence aux dessins annexés.

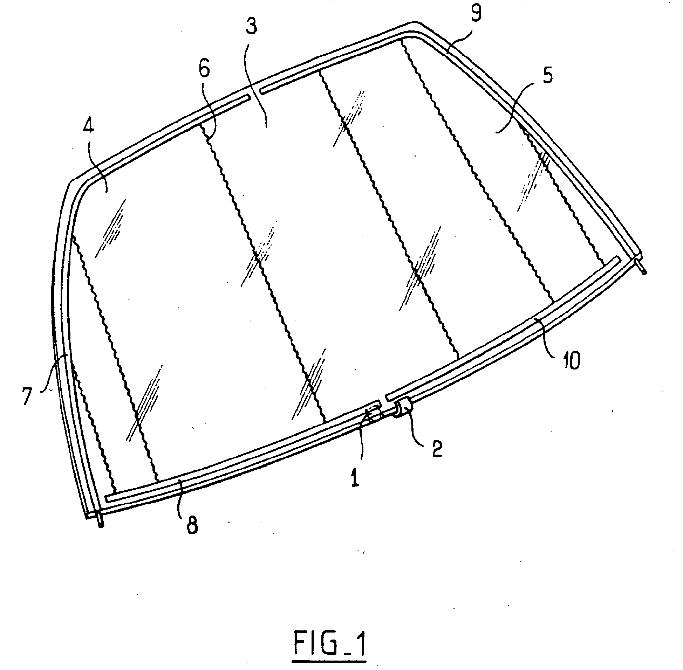

La figure 1 représente une vue partielle, en perspective, d'un vitrage chauffant selon l'invention.

La figure 2 représente, en détail, les parties conductrices de l'élément de connexion.

La figure 3 représente une coupe transversale d'autres types de parties conductrices.

La figure 4 représente, en perspective, l'élément de connexion sur le vitrage, muni de son enrobage.

La figure 5 représente, en perspective, un moule utilisé dans le cadre de l'invention.

Le vitrage selon l'invention est muni de deux éléments de connexion 1 et 2 selon l'invention. Dans cet exemple, il s'agit d'un vitrage feuilleté 3 comportant deux réseaux 4 et 5 de fils fins de résistance électrique de chauffage 6 montés dans l'intercalaire thermoplastique. Chaque fil chauffant 6 est relié électriquement à deux bandes collectrices, respectivement 7, 8, 9, 10, le réseau 4 comportant les bandes 7 et 8, le réseau 5 les bandes 9 et 10. Les bandes collectrices sont par exemple constituées de bandes de clinquant de cuivre de 0,05 mm d'épaisseur et de 5 mm de largeur, recouvertes d'alliages à base d'étain à bas point de fusion. Bien entendu, elles peuvent également présenter une autre largeur et, le cas échéant, une autre épaisseur, en fonction de la puissance électrique du vitrage chauffant. La connexion selon l'invention est utilisée ici pour relier les bandes 8 et 10 à une source d'alimentation électrique.

L'élément 1 est représenté dans cet exemple avant le moulage et l'élément 2 est représenté après le moulage.

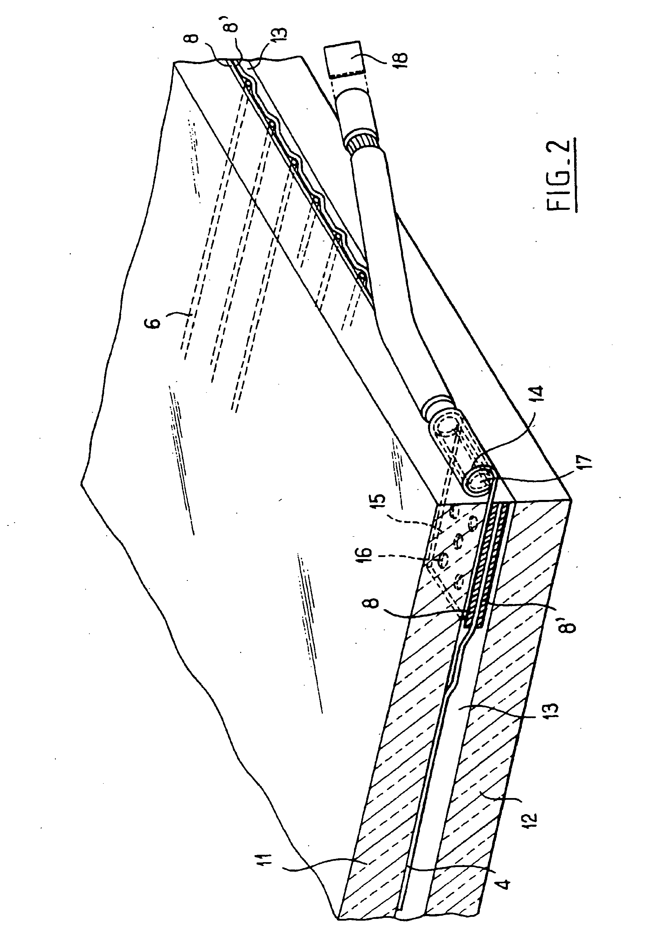

La figure 2 représente plus en détail l'élément 1.

Le vitrage 3 est ici représenté feuilleté. Il comporte deux feuilles de verre 11 et 12 entre lesquelles est intercalé un intercalaire thermoplastique 13.

Le réseau chauffant constitué de fils fins de résistance électrique de chauffage 6, est monté dans cet exemple dans l'intercalaire thermoplastique 13, plus précisément sur la face de l'intercalaire 13 se situant entre la feuille de verre 11 et l'intercalaire 13. Il peut également être monté entre la feuille de verre 12 et l'intercalaire 13. Dans cet exemple, il est monté entre deux bandes collectrices 8 et 8'.

Les parties conductrices dans cet exemple sont constituées d'une virole de connexion 14 prolongée par une patte 15 en contact électrique avec la bande collectrice 8. Cette patte peut éventuellement comporter des évidements 16 facilitant sa fixation lors de l'assemblage du vitrage feuilleté. Une cosse mâle 17 est représentée enfichée dans la virole 14 afin de connecter électriquement la bande collectrice 8 à une source d'alimentation représenté schématiquement en 18.

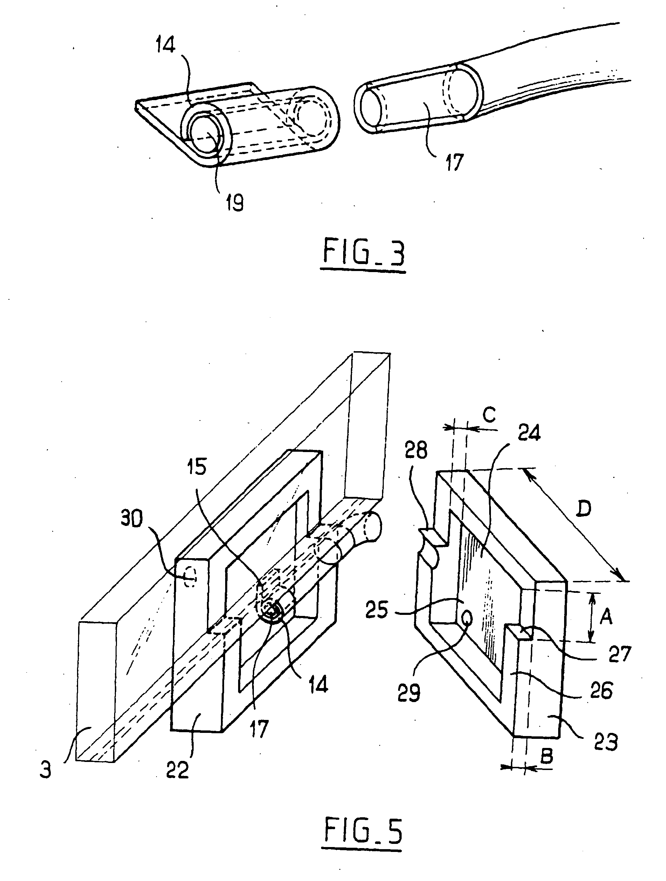

Bien entendu d'autres types de parties conductrices peuvent être également envisagées selon l'invention. La virole de connexion peut par exemple être enroulée sur une cosse femelle 19 comme représentée dans la figure 3 dans laquelle vient s'enficher une cosse mâle 17.

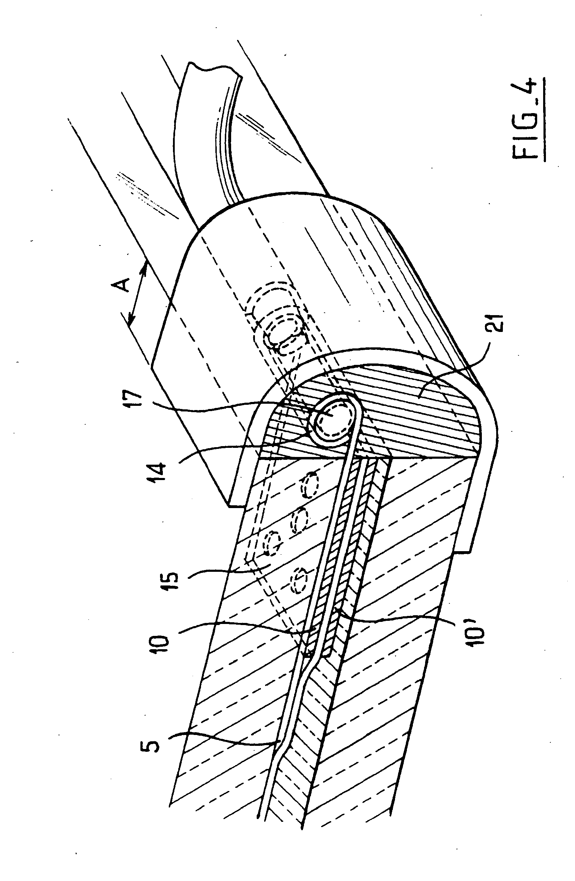

La figure 4 représente l'élément de connexion en position finale, c'est-à-dire enrobé. Le matériau constituant l'enrobage 21 épouse parfaitement les parties conductrices de l'élément de connexion, en particulier la virole 14 comme représenté sur la figure. L'enrobage possède ici une forme semi-cylindrique, il est bien entendu qu'il peut posséder n'importe quelle forme. L'encombrement de l'élément de connexion de l'invention sur le vitrage est minime. Il peut être aussi petit qu'environ 50 mm² sur chaque face du vitrage.

La longueur A, correspondant à la longueur recouverte par l'enrobage sur une face du vitrage peut par exemple être aussi petite que 5 mm. Elle peut être différente d'une face à l'autre. Elle est comprise selon l'invention entre 5 et 30 mm.

La figure 5 représente un exemple de moule pour mettre en oeuvre l'invention.

Le moule est constitué de deux parties 22 et 23. Seule la partie 23 est décrite dans la suite de la description, la partie 22 étant sensiblement symétrique. Chaque partie de moule est subdivisée en deux parties, une cavité supérieure 24 et une cavité inférieure respectivement 25. Les cavités inférieures possèdent une profondeur supérieure à celle des cavités supérieures de par la présence d'une surépaisseur 26 créant deux butées 27 et 28 sur lesquelles vient reposer le vitrage. La surépaisseur a une profondeur B correspondant à la demi-épaisseur du vitrage à surmouler. La profondeur des parois du moule C correspond à l'épaisseur de l'enrobage chevauchant le vitrage. L'encombrement de l'enrobage en bord de vitrage est défini par la longueur A de la cavité supérieure 24 multiplié par la largeur D du moule. Il est évident que plus ces dimensions sont petites, plus l'encombrement est réduit. Cependant l'enrobage contribuant à la fixation de l'élément de connexion sur le vitrage, une certaine aire de contact est nécessaire. Selon l'invention les dimensions optimales s'avèrent être une profondeur C de l'ordre de 2 mm, une longueur A comprise entre 5 et 15 mm et une longueur D comprise entre 10 et 25 mm.

Les dimensions sont, par exemple, de l'ordre de 2 x 10 x 20 mm.

Le procédé comprend par exemple les étapes suivantes :

On applique la partie du moule 22 contre le vitrage 3, par exemple comme représenté sur la figure. Les parties 14 et 17 des parties conductrices sont en position connectée.

Il peut également s'agir d'autres types de connexion.

On applique ensuite la partie 23 du moule contre le vitrage. Le moule est ainsi fermé d'une part par les parois du moule concernant les cavités inférieures et d'autre part par l'épaisseur du vitrage pour les cavités supérieures. La matière est injectée par le trou d'injection 29, éventuellement sous pression, et/ou sous chauffage, elle remplit la totalité de la cavité du moule. On laisse un léger excès s'échapper du trou d'évent 30 ménagé dans la partie 22 du moule. L'injection est alors stoppée. Le moule peut être chauffé et/ou refroidi selon le type de matériau utilisé. Une fois le polymère suffisamment polymérisé, on peut procéder au démoulage. Avantageusement, le moule est laissé sur le vitrage. On s'affranchit alors de toutes les étapes ultérieures à la fin de l'injection et relatives au démoulage.

Il est bien entendu que le vitrage selon l'invention peut être monolithique ou feuilleté.

L'enrobage peut être de n'importe quelle forme. Il peut n'être en contact avec qu'une seule face du vitrage. Les dimensions et la position de l'élément de connexion sont fonction de l'utilisation envisagée ainsi que celles du câble d'alimentation.

Le procédé permet en quelque sorte une plus grande souplesse quant aux dimensions de l'élément de connexion. Il permet, en particulier, de les réduire tout en respectant les exigences de solidité, d'étanchéité et d'isolation requises par ailleurs. Ce moulage apte à être peu encombrant et, malgré tout solide et étanche, est particulièrement adapté au vitrage nécessitant une liaison électrique (circuit chauffant, connexion d'antenne, de capteurs...), alors que la proximité des bords des vitrages est encombrée notamment par des moyens de fixation desdits vitrages et ne permet pas de loger une connexion connue.

La demande de brevet EP-A-0 299 868 décrit l'enrobage d'une seule des deux parties conductrices destinées à être connectées. La connexion de ces deux parties, postérieure à cet enrobage, s'accompagne de l'enfoncement d'une pellicule de matière organique.

La demande de brevet EP-A-0 490 723 décrit des parties conductrices destinées à être connectées, consistant en une virole de connexion et une cosse mâle. Il n'est cependant pas prévu d'enrobage pour ces parties.

## Revendications

1. Vitrage muni d'au moins un élément de connexion électrique, l'élément de connexion électrique comprenant une première partie conductrice (14) et une deuxième partie conductrice, la première partie conductrice étant, d'une part, reliée et en contact électrique avec des conducteurs électriques pris dans le vitrage et étant, d'autre part, destinée à être reliée à ladite seconde partie conductrice, ladite seconde partie conductrice étant constituée d'une première extrémité conductrice (17) destinée à être reliée à la première partie conductrice (14) et d'une seconde extrémité conductrice reliée à une source d'alimentation, lesdites première partie conductrice (14) et première extrémité conductrice (17) étant en position connectée et en saillie du vitrage, **caractérisé en ce que** le vitrage est muni en outre d'un enrobage (21) dont le matériau constitutif épouse la première partie conductrice (14) et la première extrémité conductrice (17) en étant moulé directement sur le vitrage, le moulage étant peu encombrant et présentant un encombrement délimité qui est défini par une aire de contact avec le vitrage nécessaire pour contribuer à la fixation de l'élément de connexion.

2. Vitrage selon la revendication 1, **caractérisé en ce que** le matériau constituant l'enrobage (21) est choisi parmi les matériaux suivants: silicone, polyuréthane monocomposant ou polyuréthane bicomposant ou un matériau fluide à chaud et solide à froid.

3. Vitrage selon la revendication 1, **caractérisé en ce que** lesdites première partie conductrice (14) et première extrémité conductrice (17) destinées à être connectées sont notamment une virole de connexion (14) et une cosse (17), par exemple, mâle.

4. Vitrage selon l'une des revendications précédentes, **caractérisé en ce que** lesdits conducteurs électriques pris dans le vitrage constituent un réseau chauffant (4, 5).

## Claims

1. Glazing provided with at least one electrical connection element, which electrical connection element comprises a first conductive part (14) and a second conductive part, the first conductive part being, on the one hand, connected and in electrical contact with electrical conductors in the glazing and, on the other hand, being intended for connection to said second conductive part, which second conductive part is constituted by a first conductive end (17) for connection to the first conductive part (14) and a second conductive end connected to a power supply, said first conductive part (14) and said first conductive end (17) being in a connected position and projecting from the glazing, **characterized in that** the glazing is also provided with an encapsulation (21), the constituent material of which fits the shape of the first conductive part (14) and the first conductive end (17) by being moulded directly onto the glazing, the moulding being compact and occupying a bounded space which is defined by an area of contact with glazing necessary for contributing to the fastening of the connection element.

2. Glazing according to claim 1, **characterized in that** the material constituting the encapsulation (21) is chosen from among the following materials: silicone, single-component or two-component polyurethane or a material which is fluid when hot and solid when cold.

3. Glazing according to claim 1, **characterized in that** said first conductive part (14) and said first conductive end (17) which are to be connected are in particular a coupling ring (14) and an e.g. male lug (17).

4. Glazing according to one of the preceding claims, **characterized in that** the electrical conductors in the Blazing constitute a heating system (4, 5).

## Patentansprüche

1. Verglasung, welche mit mindestens einem elektrischen Anschlusselement ausgestattet ist, das einen ersten leitfähigen Teil (14) und einen zweiten leitfähigen Teil umfasst, wobei der erste leitfähige Teil einerseits mit in der Verglasung aufgenommenen elektrischen Leitern verbunden und im elektrischen Kontakt ist und andererseits vorgesehen ist, mit dem zweiten leitfähigen Teil verbunden zu werden, wobei dieser zweite leitfähige Teil aus einem ersten leitfähigen Ende (17), das vorgesehen ist, mit dem ersten leitfähigen Teil (14) verbunden zu werden, und aus einem an eine Spannungsquelle angeschlossenen zweiten leitfähigen Ende besteht, und der erste leitfähige Teil (14) und das erste leitfähige Ende (17) sich in verbundener Position befinden und von der Verglasung vorstehen, **dadurch gekennzeichnet, dass** die Verglasung außerdem mit einer Ummantelung (21) versehen ist, deren diese bildendes Material auf dem ersten leitfähigen Teil (14) und dem ersten leitfähigen Ende (17) anliegt, indem es direkt auf die Glasscheibe aufgeformt worden ist, wobei die Aufformung wenig Raum einnimmt und einen begrenzten Platzbedarf aufweist, der von der Kontaktfläche mit der Verglasung definiert wird, die erforderlich ist, um zur Befestigung des Anschlusselements beizutragen.

2. Verglasung nach Anspruch 1, **dadurch gekennzeichnet, dass** das Material, aus welchem die Ummantelung (21) besteht, aus folgenden Materialien: Silicon, Einkomponenten- bzw. Zweikomponenten-Polyurethan oder einem Material, das in der Hitze flüssig und in der Kälte fest ist, ausgewählt ist.

3. Verglasung nach Anspruch 1, **dadurch gekennzeichnet, dass** der erste leitfähige Teil (14) und das erste leitfähige Ende (17), die vorgesehen sind, miteinander verbunden zu werden, insbesondere ein Anschlussring (14) und ein beispielsweise steckerförmiger Kabelschuh (17) sind.

4. Verglasung nach einem der vorhergehenden Ansprüche, **dadurch gekennzeichnet, dass** die in der Verglasung aufgenommenen elektrischen Leiter ein Beheizungsnetz (4, 5) bilden.
